# FASCICULE DE BREVET EUROPEEN

(11) **EP 0 703 687 B1**
(45) Date de publication et mention de la délivrance du brevet: **18.12.2002**
(21) Numéro de dépôt: 95402136.6
(22) Date de dépôt: 22.09.1995
(51) Int. Cl.: H04L 27/22

(54) **Récupération de la porteuse d'un signal modulé en sauts de phase**
Trägerrückwinnung für PSK Signale
Carrier recovery for PSK signals

(30) Priorité: 23.09.1994 FR 9411389
(43) Date de publication de la demande: 27.03.1996
(73) Titulaire: FRANCE TELECOM, 75015 Paris (FR)
(72) Inventeur: Mortensen, Ivar, F-31000 Toulouse (FR); Boucheret, Marie-Laure, F-31120 Goyrans (FR); Favaro, Henri, F-31570 Sainte Foy d'Aigrefeuille (FR); Belis, Eric, F-31000 Toulouse (FR)
(74) Mandataire: Fort, Jacques

(56) Documents cités:
- EP-A- 0 200 271
- EP-A- 0 252 500
- ELECTRONICS AND COMMUNICATIONS IN JAPAN, vol. 67-B, no. 5, NEW YORK US, pages 47-56, NAMIKI 'Block demodulation for short radio packet'
- 1988 IEEE INTERNATIONAL SYMPOSIUM ON CIRCUITS AND SYSTEMS, 7 - 9 Juin 1988 ESPOO, FI, pages 1815-1818, EGLIN ET AL. 'Digital implementation of a coherent CPM system for mobile radio'
- BOUCHERET M-L; MORTENSEN I: 'A NEW ALGORITHM FOR NONLINEAR ESTIMATION OF PSK-MODULATED CARRIER PHASE' EUROPEAN CONFERENCE ON SATELLITE COMMUNICATIONS 02 Novembre 1993 - 01 Novembre 1993, pages 155 - 159, XP000910248

## Description

L'invention concerne les procédés d'évaluation numérique de la phase d'une porteuse et elle trouve une application importante dans les systèmes de démodulation cohérente de signaux modulés en phase, c'est-à-dire notamment des signaux dits MDP (ou PSK en terminologie anglo-saxonne).

La récupération de la fréquence d'horloge et celle de la phase de porteuse sont nécessaires à la démodulation cohérente des signaux transmis par modulation de phase de la porteuse. Par ailleurs, on cherche de plus en plus à effectuer de façon numérique les traitements du signal dès un stade aussi en amont que possible, notamment pour profiter des progrès accomplis dans l'implémentation des systèmes numériques, de la rapidité que permettent d'atteindre les circuits cablés ou réalisés sous forme de circuits intégrés d'application spécifique, et de la facilité de reconfiguration qu'ils permettent.

On a déjà réalisé dans ce but un procédé suivant lequel, après récupération d'horloge, échantillonnage et numérisation des amplitudes en phase et en quadrature des échantillons, on effectue un traitement du signal en coordonnées polaires, comprenant une élimination de la modulation par réduction du domaine de variation de la phase de chaque échantillon à un domaine compris entre + π/r et - π/r (r étant le nombre d'états de phase de la modulation) ; puis recherche de barycentre sur un groupe de 2^{N} échantillons consécutifs (N étant un nombre entier). Au cours de cette recherche on effectue des calculs de moyenne successifs, chaque fois sur deux valeurs adjacentes, selon une arborescence convergente à N étapes. La correction de phase de 2^{N} symboles successifs est ensuite effectuée en utilisant la valeur moyenne de la phase obtenue sur ces 2^{N} symboles, et ainsi de suite sur les groupes suivants.

Ce procédé, décrit dans la communication de M.L. BOUCHERET et al "A new algorithm for non-linear estimation for PSK-modulated carrier phase", Proceedings of ECSC3, Manchester, Novembre 1993, présente, sur le procédé classique d'estimation de A.J. VITERBI et A.M. VITERBI (IEEE TRANS. on Information Theory, vol. IT-29, 543-551), l'avantage d'être beaucoup plus facilement implémentable sous forme matérielle, notamment en arithmétique en complément à 2.

Mais, du fait que la recherche de barycentre s'effectue en tenant le même compte de tous les échantillons parmi 2^{N}, la présence d'un échantillon fortement affecté de bruit de phase peut perturber notablement l'estimation du barycentre et en conséquence la démodulation de 2^{N} symboles successifs.

Le document EP-A-0 200 271 décrit par ailleurs un circuit de récupération de porteuse d'une onde modulée en phase éliminant les points reçus qui sont susceptibles de provoquer une acquisition erronée de l'amplitude et de la phase de la porteuse sont éliminés. Pour cela le dispositif élimine les points reçus qui sont en dehors de zones de sélection situées autour de certains états diagonaux de la constellation de symboles.

On connaît également (document EP-A-0 252 500) un démodulateur d'une porteuse modulée en MDP8 comportant un égaliseur qui reçoit des signaux d'erreur générés uniquement à partir des signaux qui ne se trouvent pas dans des zones couvrant intégralement les intervalles de phase entre les points successifs de la constellation.

Un premier résultat recherché par l'invention est en conséquence de diminuer ou d'écarter l'influence des échantillons susceptibles de présenter un bruit de phase excessif, et cela sans augmenter notablement la complexité du procédé ou du dispositif.

Dans ce but l'invention propose notamment un procédé suivant la revendication 1.

Il serait possible d'affecter simplement un poids inférieur à une moyenne de deux valeurs qui a un indice de fiabilité faible. Mais en général la complexité qu'impliquerait cette façon de procéder conduira à l'écarter, au profit du rejet pur et simple des moyennes douteuses.

Divers critères d'affectation de l'indice de fiabilité peuvent être utilisés. Des exemples de critères seront donnés plus loin.

Comme on l'a relevé plus haut, la même valeur de la phase de porteuse évaluée sur un groupe de 2^{N} échantillons est utilisée pour démoduler tous les symboles de ce groupe, dans le procédé de l'article de M.L. BOUCHERET et al. Une nouvelle estimation est calculée et utilisée pour le groupe suivant.

Cette approche est satisfaisante lorsque la fréquence de porteuse varie relativement lentement. En revanche, les performances du procédé suivant l'article de M.L. BOUCHERET et al cité plus haut se dégradent si la porteuse présente des écarts de fréquence élevés.

L'invention propose également un procédé destiné à tenir compte de ce risque, avantageusement utilisable en liaison avec les mesures précédentes, mais pouvant l'être indépendamment ; suivant ce procédé, on utilise,pour la démodulation de deux symboles successifs représentés par un échantillon chacun, une moyenne de phase de porteuse obtenue par recherche du barycentre à partir des phases de la porteuse au cours de la transmission de nombres sensiblement égaux de symboles antérieurs et postérieurs.

L'invention propose par ailleurs des dispositifs d'évaluation numérique de la phase d'une porteuse modulée en phase, permettant de mettre en oeuvre les procédés ci-dessus, suivant la revendication 9.

L'invention sera mieux comprise à la lecture de la description qui suit de modes particuliers de réalisation, donnés à titre d'exemples non limitatifs. La description se réfère aux dessins qui l'accompagnent, dans lesquels :
- la figure 1 montre le calcul de la moyenne φₓ de deux phases d'entrée φ'₁ et φ'₂ ramenées au domaine [- π/4,+ π/4) (fonction BAR) ;
- la figure 2 est un schéma de principe montrant la mise en oeuvre du calcul du barycentre utilisant l'algorithme BAR de la figure 1 ;
- la figure 3 est un synoptique de principe montrant des algorithmes supplémentaires qui interviennent dans la mise en oeuvre de l'invention , en cas de modulation MDP4 avec un seuil égal à 3π/16;
- la figure 4 montre la structure arborescente du calcul suivant l'invention ;
- la figure 5 est un synoptique de principe d'un circuit d'estimation de moyenne, dans le cas d'une modulation MDP4, avec N=16 exécutant la fonction BAR en arithmétique en complément à 2 ;
- la figure 6 montre une modification de l'arborescence de la figure 4 permettant d'utiliser des moyennes glissantes, réduisant l'influence des variations de fréquence ;
- la figure 7 est un synoptique de principe d'un dispositif de mise en oeuvre de l'invention avec utilisation d'une moyenne glissante ; et
- la figure 8 montre une variante de la figure 7.

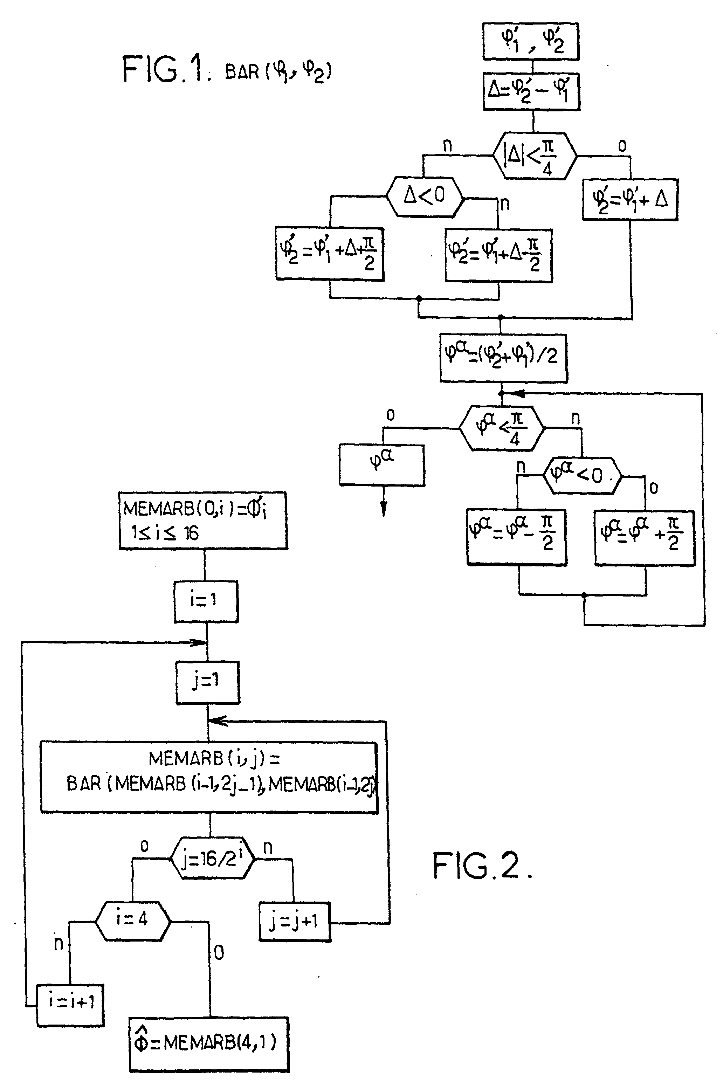

On rappellera tout d'abord, en faisant référence aux figures 1 et 2, le mode d'estimation de la phase de porteuse par calcul du barycentre. Une description plus complète en est donnée dans l'article de M.L. BOUCHERET et al, mentionné ci-dessus, et auquel on pourra se reporter.

Le signal reçu est tout d'abord filtré, échantillonné et numérisé par un processus classique. Puis les composantes en phase et en quadrature des échantillons sont traités, à la fréquence de symboles et une élimination de la modulation par réduction du domaine de définition des phases d'origine φ à l'intervalle [- π/4.+ π/4] est effectuée. Les valeurs φ' ainsi obtenues pour un groupe de 2^{N} échantillons sont mémorisées. Du fait qu'un calcul direct de moyenne par addition des valeurs φ' deux à deux, puis division par 2, donne dans certains cas un résultat erroné, on applique d'abord une fonction qu'on appellera BAR, schématisée en figure 1, à chaque couple φ d'entrée.

Une fois toutes les valeurs des phases φ d'entrée ramenées à l'intervalle - π/4,+ π/4, les 2^{N} valeurs φ', comprises entre - π/4, et + π/4, sont additionnées deux à deux.

La figure 1 montre comment obtenir une moyenne à partir de deux valeurs φ₁ et φ₂. 2^{N-1} moyennes sont obtenues à partir des 2^{N} phases d'entrée.

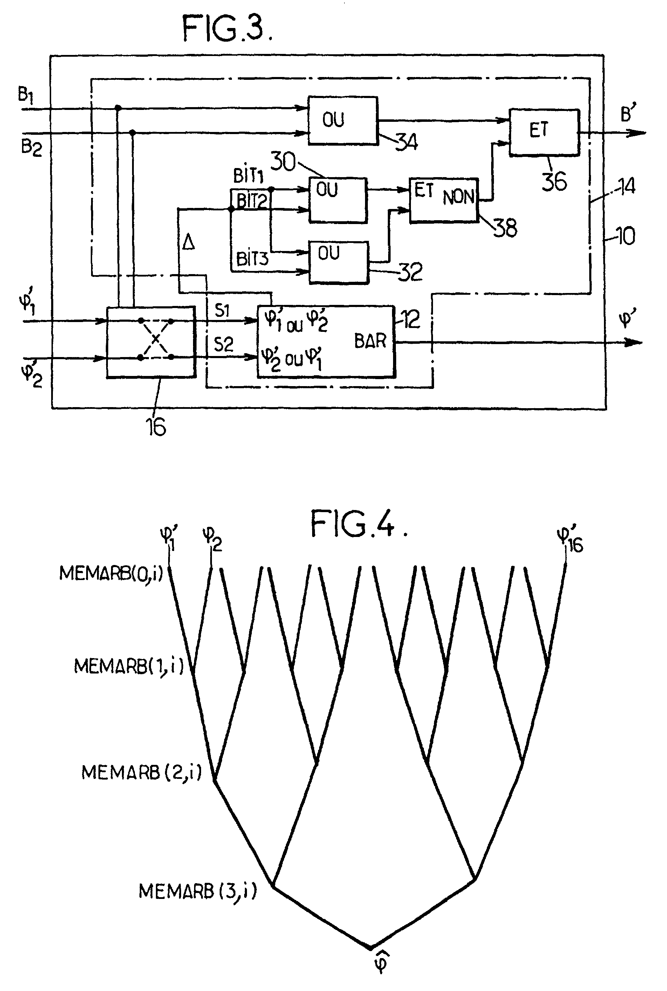

La figure 4 montre l'arborescence parcourue.

La détermination du barycentre s'effectue alors par l'algorithme schématisé sur la figure 2. Sur cet algorithme, l'opération montrée en figure 1 est indiquée par BAR. Les 2^{N} valeurs réduites à l'intervalle [- π/4,+ π/4] et mémorisées, sont encore désignées par MEMARB (0,i) où i est compris entre 1 et 2^{N}.

L'exemple montré en figure 2 correspond à 2^{N}=16. L'arborescence comprend alors quatre étages successifs. Sur cette figure 2, MEMARB (j,i) désigne la ième valeur obtenue à la fin de la j^{ème} étape de sommation.

Le groupe ayant 2^{N}=16 échantillons, la valeur estimée de la phase peut s'écrire ψ = MEMARB (j = 4, i = 1) à l'issue des étapes indiquées en figure 4.

Conformément à un premier aspect de l'invention, on associe, à chaque moyenne MEMARB de deux phases, un bit de fiabilité, qui, suivant sa valeur, provoquera soit la prise en compte, soit l'effacement de la valeur dans la suite du calcul. Cela conduit à modifier la fonction BAR montrée en figure 1 et 2 pour arriver à une fonction 10, qui sera dénommée SEBAR et qui apparaît sur la figure 3 où le bit supplémentaire affecté à deux valeurs d'entrée est indiqué par B1 ou B2, respectivement, pour les phases φ'₁ et φ'₂. Une fonction EBAR interne à SEBAR met en oeuvre, pour élaborer le bit de fiabilité B' s'attachant à la moyenne φ', à partir de deux bits de fiabilité B1 et B2, correspondant aux phases φ'_{'1} et φ'₂, et de l'écart Δ = /φ'₁ - φ'₂/, un algorithme qui peut être le suivant :
B' = 0 si B1 = 0 et B2 = 0, ou si la valeur absolue de Δ est supérieur à S (S étant un seuil prédéterminé)
B' = 1 dans tous les autres cas.

En d'autres termes, on donne au bit d'effacement B' la valeur 0 si :
la distance angulaire Δ entre les deux valeurs de phase φ'1 et φ'2 est supérieure à un seuil S, qui sera choisi notamment en fonction du nombre d'états possibles de la modulation utilisée et d'autres paramètres, comme, par exemple, la complexité d'implantation acceptable, ou
si les deux bits d'effacement associés aux deux phases dont on effectue la somme sont tous les deux égaux à 0,
le premier cas indiquant un manque de fiabilité sur au moins une des deux phases.

Les bits de fiabilité associés aux 2^{N} phases d'origine peuvent être, par principe, mis à la valeur 1.

Pour la modulation MDP4, une valeur S = 3 π/16 donnera en général des résultats satisfaisants. Pour des modulations à davantage d'états de phase, par exemple MDP8 ou MDP16, on sera conduit à prendre une valeur de seuil inférieure.

La fonction EBAR 14 permet d'élaborer les bits de fiabilité. L'utilisation de ces bits implique l'adjonction de moyens d'effacement pour arriver à une fonction qu'on appellera SEBAR. Cette fonction SEBAR est remplie, dans le cas de la figure 3, par un module 10 qui incorpore des moyens 12 d'exécution de la fonction BAR déjà décrite, un circuit 14 (ou un module logiciel) d'élaboration de B' à partir de B1, B2 et Δ, et un module dit d'effacement ou de substitution 16.

Le module d'effacement 16 est à deux entrées de données φ'₁ et φ'₂ et deux sorties S₁ et S₂ et il utilise les bits B₁ et B₂ comme bits de commande. Il effectue l'opération :

Si :
B₁ = 1, S₁ = φ'₁
B₁ = 0, S₁ = φ'₂
B₂ = 1, S₂ = φ'₂
B₂ = 0, S₂ = φ'₁

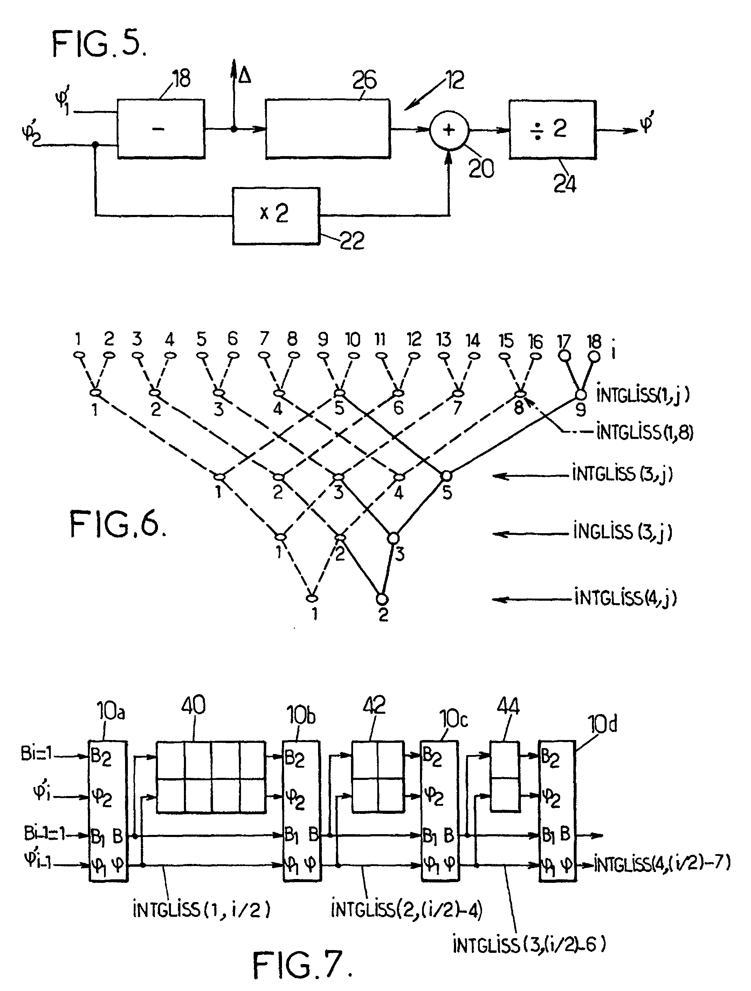

La fonction BAR peut être implémentée comme indiqué sur le figure 5, à l'aide d'un additionneur 20 et un soustracteur 18 et de trois fonctions élémentaires : une multiplication par deux 22, (qui est un simple décalage à gauche en arithmétique en base deux) une division par deux 24 qui est un simple décalage à droite, et une extension de signe 26.

La sortie de l'additionneur 18 fournit Δ : pour effectuer la comparaison avec un seuil, il suffit en général de conserver uniquement les bits les plus significatifs (3 bits par exemple dans le cas illustré).

Si les valeurs φ₁ et φ₂ sont quantifiées sur n bits, l'additionneur 18 a une sortie sur n bits et ne tient pas compte de la retenue. L'additionneur 20 a alors deux entrées de n+1 bits et une sortie sur n+1 bits (arithmétique en complément à 2); il n'est là aussi pas tenu compte de la retenue. La sortie φ est quantifiée sur n bits, en enlevant le bit de poids faible ou LSB.

La fonction EBAR (figure 3) exige, en plus des composants pour exécuter la fonction BAR ceux nécessaires pour exécuter une fonction supplémentaire ; ces composants sont au nombre de cinq dans le cas de la figure 3. Chacun des composants exécute une fonction élémentaire sur un seul bit. Ils comportent :
- deux portes logiques OU EXCLUSIF (XOR) 30 et 32 ;
- une porte OU 34, qui reçoit B₁ et B₂ et fournit un bit de sortie égal à 1 si l'un au moins des bits de fiabilité B₁ et B₂ est égal à 1 et fournit un bit de sortie égal à 0 si les bits de fiabilité B₁ et B₂ sont égaux à 0 ;
- une porte ET COMPLEMENTEE (NAND) 38 qui reçoit la sortie des portes 30 et 32 ; et
- une porte ET de sortie 36.

L'estimation dans le cas de groupes de 2^{N} = 16 échantillons s'effectue alors de la façon suivante.

L'entrée de l'estimateur reçoit les 16 valeurs de phase φ'₁,...φ'₁₆, chacune affectée d'un bit de confiance ou de fiabilité B égal à 1.

Ces valeurs sont avantageusement représentées en complément à deux, lorsque les fonctions doivent être implantées sur un circuit intégré spécifique (ASIC). Si la porteuse présente une modulation MDP4, cette dernière est éliminée en enlevant les deux bits de poids fort.

Dans le cas de la figure 3, le seuil pour la détermination du bit de confiance est égal à 3π/16, bien adapté à une modulation MDP4 et à l'implémentation. Il est matérialisé par les portes 30, 32 et 38. Pour cela la porte 30 reçoit les bits de poids fort 1 et 2 de Δ et la porte 32 reçoit les bits 2 et 3.

Une autre logique combinatoire permettrait d'implémenter simplement un seuil différent.

Suivant la rapidité souhaitée, les calculs sont effectués en série ou en parallèle. Le circuit 10 illustré en figure 3 sera, suivant le mode de calcul adapté, en un seul exemplaire avec multiplixage temporel et stockage des résultats intermédiaires, ou au maximum en autant d'exemplaires qu'il y a de noeuds dans l'arborescence. Des solutions intermédiaires sont possibles. De plus les portes 34 et 36 peuvent être omises au premier étage.

Comme on l'a indiqué plus haut, l'utilisation d'une même estimation de la moyenne des phases pour tous les symboles appartenant a un même groupe ou bloc dégrade les performances de l'algorithme du barycentre s'il y a des instabilités de fréquence. Si par exemple la moyenne est effectuée sur 2^{N}=16 valeurs, l'utilisation de la même moyenne du premier au seizième symbole a des conséquences défavorables en cas d'évolution rapide de la fréquence pendant la durée de transmission du groupe de symboles.

L'invention propose également un procédé et un dispositif d'estimation de phase conservant le calcul du barycentre, mais avec une moyenne "glissante", ce terme signifiant que la moyenne utilisée pour démoduler un symbole est établie à partir des phases de la porteuse au cours de la transmission de symboles antérieurs et de symboles postérieurs, et cela sans compliquer notablement l'implémentation du procédé.

Un résultat optimum est obtenu lorsque l'on utilise un nombre de symboles antérieurs sensiblement égal au nombre de symboles postérieurs. Par exemple, dans le cas d'une estimation de moyenne sur 16 valeurs, les symboles d'ordre i à i+15 sont alors utilisés pour démoduler le symbole i+7, puis les phases i+1 à i+16 pour démoduler le symbole i+8, et ainsi de suite.

Par la suite, on considérera qu'on veut effectuer une moyenne glissante sur m=2^{N} échantillons, qu'on désignera par 2k+1, 2k+2,... 2k+m, où k est un entier de valeur initiale nulle et qui s'incrémente de 1 à chaque nouvelle moyenne glissante. On désignera par j l'échantillon de la phase d'un symbole Sⱼ.

On utilise encore dans ce cas une structure arborescente à N étages pour effectuer la moyenne. Chaque estimation destinée à deux échantillons successifs implique 2^{N}-1 calculs de la fonction SEBAR définie ci-dessus. Mais beaucoup des calculs intermédiaires nécessaires à l'estimation de la moyenne destinée au décodage de deux échantillons successifs ont déjà été faits pour l'estimation de la moyenne correspondant aux deux échantillons précédents.

Cette constatation, qui permet de réduire l'accroissement de complexité nécessaire à la mise en oeuvre de cet aspect de l'invention, apparaît sur la figure 6 qui montre une arborescence permettant une simplification. Sur cette figure, l'arborescence indiquée en tirets correspond à l'estimation de la phase pour les symboles 8 et 9, dans le cas où 2^{N}= 16. Les calculs supplémentaires à effectuer pour estimer la phase utilisée pour les deux échantillons suivants 10 et 11 sont figurés par les lignes en traits pleins.

De façon plus générale, si on désigne par intgliss(i,j) chaque résultat partiel, où i est le numéro de l'étage de l'arbre (i de 1 à N) et j le numéro du résultat partiel de l'étage considéré (j de k+1 à k+m/2ⁱ), les déterminations successives sont effectuées à l'aide des fonctions :
. intgliss(1,j)=SEBAR(2j-1,2j)
. intgliss(i,j)=SEBAR[intgliss(i-1,j),intgliss(i-1,j+(m/2ⁱ))], pour i de 2 à N.

La valeur finale intgliss (N,k+1) constitue une estimée de la phase de la porteuse. Elle est utilisée pour démoduler deux symboles successifs S_{2k+(m/2)} et S_{2k+m/2+1}.

Parmi les m-1 calculs nécessaires pour ces deux symboles, la plupart ont été effectués pour l'estimation de la phase utilisée pour les deux symboles précédents, et il suffit de calculer N nouvelles fonctions SEBAR, et non pas m-1.

Le fait que l'on "glisse" de deux symboles à la fois, et non pas d'un seul, pour chaque nouveau calcul n'a qu'une faible incidence sur les performances, alors qu'il fournit un gain important de complexité matérielle.

Dans l'exemple de la figure 6, où 2^{N}=16, on voit que l'arborescence est différente de celle de la figure 4. Par exemple :
. Intgliss(1,8)=SEBAR[15,16],
. Intgliss(2,3)=SEBAR[Intgliss(1,3),Intgliss(1,7)].

La valeur finale Intgliss(4,1) est utilisée pour démoduler les symboles S8 et S9.

Dans le cas d'une moyenne glissante, il faut calculer une autre estimée de la phase de porteuse pour démoduler les symboles S10 et S11, cette fois à partir des échantillons de phase désignés par 3,4,...,17,18 sur la figure 6.

On abandonne donc Intgliss(1,1) au profit de Intgliss (1,8).

Parmi les quinze moyennes à effectuer, onze ont déjà été déterminées lors du calcul de intgliss(4,1). Il ne reste à effectuer que 4 calculs :
. Intgliss(1,9)=SEBAR[i=17,i=18]
. Intgliss(2,5)=SEBAR[Intgliss(1,5),Intgliss(1,9)]
. Intgliss(3,3)=SEBAR[Intgliss(2,3),Intgliss(2,5)]
. Intgliss(4,2)=SEBAR[Intgliss(3,2,Intgliss(3,3)]

Plus généralement, pour des valeurs quelconques de m=2^{N} et de k, il faut, pour déterminer une estimée de la phase, calculer la fonction SEBAR :
. m-1 fois pour la première estimation complète
. N fois pour les suivantes.

L'implémentation de l'arborescence pour calculer une moyenne glissante sur 16 échantillons peut être par exemple celle montrée en figure 7, où la fonction SEBAR est présente à quatre étages et où les calculs sont faits en parallèle sur les différents étages, à une même fréquence d'horloge.

La structure de la figure 7 comporte quatre étages SEBAR 10a, 10b, 10c, 10d. Entre les étages 10a et 10b, les résultats intermédiaires :
. Intgliss(1,(i/2)-4)
. Intgliss(1,(i/2)-3)
. Intgliss(1,(i/2)-2)
. Intgliss(1,(i/2)-1)
sont stockés dans des cellules successives d'une mémoire premier entrée-premier sortie ou FIFO 40 qui constitue des registres à décalage.

De même les résultats intermédiaires
. Intgliss(2,(i/1)-5)
. Intgliss(2,(i/2)-6)
sont mémorisées provisoirement dans une mémoire 42 entre les étages 10b et 10c.

Enfin, une dernière mémoire retient provisoirement Intgliss(3,(i/2)-7) entre les étages 10c et 10d.

Suivant la vitesse requise, qui elle-même dépend de la fréquence des symboles, l'implémentation utilisera plus ou moins d'opérations en parallèle ou en temps partagé, et exigera un nombre de portes plus ou moins élevé.

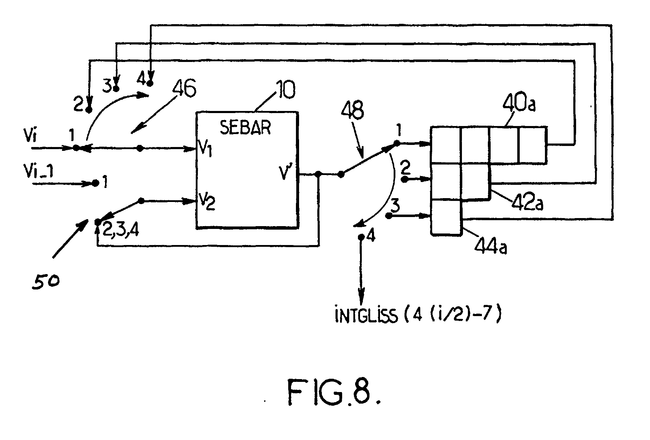

Dans le cas où des étages fonctionnent en temps totalement partagé, ils peuvent utiliser une seule fonction SEBAR et avoir la constitution montrée en figure 8 où Vᵢ (ou Vᵢ₋₁) désigne l'ensemble des deux signaux φᵢ et Bᵢ (où φᵢ₋₁ et Bᵢ₋ ₁). Des multiplexeurs 48 et 46, représentés sous forme de commutateurs, permettent de reboucler les sorties de mémoires 40a, 42a et 44a sur l'entrée V₁ et d'alimenter les mémoires. Un multiplexeur 50 à deux entrées permet d'appliquer d'abord Vᵢ₋₁, puis la sortie de la fonction SEBAR sur l'entrée V₂.

Dans le cas illustré, les blocs sont de 16 symboles, mais un autre nombre serait possible, à condition qu'il s'agisse d'une puissance de deux. L'utilisation d'un bit de confiance et celle de moyennes glissantes sont avantageusement combinées, mais l'une d'elles peut être omise.

## Revendications

1. Procédé d'évaluation numérique de la phase d'une porteuse modulée en phase MDPr, r étant le nombre d'états de phase de la modulation, suivant lequel, après récupération d'horloge, échantillonnage et numérisation des composantes en phase et en quadrature des échantillons, on effectue un traitement en coordonnées polaires comprenant une réduction du domaine de définition de la phase de chaque échantillon à un domaine compris entre +π/r et -π/r, puis une recherche de barycentre sur 2^{N} échantillons successifs, N étant un nombre entier, en effectuant des calculs de valeurs moyennes successifs, chaque fois sur deux valeurs d'entrée, selon une arborescence à N étapes, jusqu'à obtenir une valeur estimée,
**caractérisé en ce qu'**on associe, à chaque moyenne de deux valeurs d'entrée, un indice indiquant le degré de fiabilité de la moyenne et on écarte, dans les calculs de moyenne ultérieurs dans l'arborescence, celles des moyennes qui sont affectées d'un indice ayant une valeur indiquant un manque de fiabilité.

2. Procédé suivant la revendication 1, **caractérisé en ce que** ledit indice est constitué par un bit s'ajoutant à ceux qui représentent la valeur de l'échantillon, pouvant prendre les valeurs 0 et 1.

3. Procédé suivant la revendication 1, **caractérisé en ce que**, au cours de chaque étape de l'arborescence, on donne, à l'indice de fiabilité de la moyenne, une valeur qui conduit à écarter ladite moyenne au cours de l'étape suivante de l'arborescence lorsque :
les indices de fiabilité associés aux deux valeurs d'entrée ont ladite valeur, ou
lorsque la différence entre les deux valeurs d'entrée dépasse un seuil prédéterminé (S).

4. Procédé suivant la revendication 3, **caractérisé en ce que**, la porteuse étant modulée en MDP4, on donne au seuil une valeur de 3π/16.

5. Procédé selon la revendication 3 ou 4, **caractérisé en ce que**, lors du calcul de la moyenne de deux moyennes d'entrée dont une a un indice indiquant une fiabilité inférieure au seuil on remplace cette moyenne d'entrée par l'autre.

6. Procédé suivant l'une quelconque des revendications précédentes, **caractérisé en ce qu'**on utilise, pour la démodulation de chaque symbole représenté par un échantillon, une moyenne de phase de porteuse obtenue par recherche du barycentre à partir des phases de la porteuse au cours de la transmission de symboles antérieurs et postérieurs.

7. Procédé suivant la revendication 6, **caractérisé en ce que**, pour rechercher le barycentre sur m=2^{N} échantillons (2k+1,..., 2k+m), on utilise les résultats des calculs de moyennes obtenus sur 2^{N} échantillons précédents (2k-1,..., 2k+m-2).

8. Procédé suivant la revendication 7, **caractérisé en ce que**, pour rechercher le barycentre, on calcule successivement :
dans une première étape, m/2 moyennes de couples d'échantillons successifs,
au cours des étapes suivantes, les moyennes entre deux moyennes obtenues à l'étape précédente jusqu'à obtention du barycentre.

9. Dispositif d'évaluation numérique de la phase d'une porteuse modulée en phase MDPr, r étant le nombre d'états de phase de la modulation, comprenant: des moyens de récupération d'horloge, d'échantillonnage, de numérisation des composantes en phase et en quadrature des échantillons et de réduction du domaine de définition de la phase de chaque échantillon à un domaine compris entre + π/r et - π/r; et des moyens (12) de recherche de barycentre sur 2^{N} échantillons successifs (N étant un nombre entier) ayant des moyens de calcul de moyennes de sortie successives, chaque fois sur deux valeurs, selon une arborescence à N étapes, **caractérisé par** des moyens (30,32,34,36,38) pour affecter à chaque moyenne de sortie un indice indiquant le degré de fiabilité de la moyenne à partir de l'indice de fiabilité des deux moyennes d'entrée et de leur écart, et des moyens (16) pour remplacer, à l'entrée des moyens de calcul d'une moyenne de sortie recevant deux valeurs d'entrée dont l'une a un indice de fiabilité inférieur à un seuil, celle des valeurs qui est à écarter par l'autre.

10. Dispositif suivant la revendication 9, **caractérisé en ce que** les dits moyens de recherche de barycentre sont prévus pour déterminer la moyenne des phases qui est utilisée pour la démodulation d'un symbole représenté par un échantillon de la porteuse au cours de la transmission de nombres égaux de symboles antérieurs et postérieurs à ce symbole.

## Patentansprüche

1. Digitales Auswerteverfahren der Phase eines r-PSK-phasenmodulierten Trägers, wobei r die Anzahl der Phasenzustände der Modulation ist, gemäß dem nach Taktwiedergewinnung, Abtastung und Digitalisierung der In-Phase- und Quadraturkomponenten der Abtastproben eine Behandlung in Polarkoordinaten durchgeführt wird, die eine Einschränkung des Bestimmungsbereiches der Phase jeder Abtastprobe auf einen Bereich zwischen +π/r und -π/r und dann eine Schwerpunktermittlung über 2^{N} aufeinanderfolgende Abtastproben umfaßt, worin N eine ganze Zahl ist, wobei aufeinanderfolgende Berechnungen von Mittelwerten, jedes Mal über zwei Eingangswerte gemäß einer Baumstruktur in N Schritten vorgenommen werden, bis ein geschätzter Wert erreicht wird,
**dadurch gekennzeichnet, daß** bei jedem Mittelwert zweier Eingangswerte ein Index zugeordnet wird, der den Zuverlässigkeitsgrad des Mittelwertes angibt, und daß bei den späteren Mittelwertberechnungen in der Baumstruktur diejenigen der Mittelwerte beseitigt werden, die mit einem Index versehen sind, der einen einen Zuverlässigkeitsmangel angebenden Wert hat.

2. Verfahren nach Anspruch 1, **dadurch gekennzeichnet, daß** der genannte Index durch ein Bit gebildet wird, das zu denjenigen noch dazukommt, die den Wert der Abtastprobe darstellen, wobei die Werte 0 und 1 angenommen werden können.

3. Verfahren nach Anspruch 1 **dadurch gekennzeichnet, daß** im Verlauf jedes Schrittes der Baumstruktur dem Zuverlässigkeitsindex des Mittelwertes ein Wert gegeben wird, der zur Beseitigung des genannten Mittelwertes im Verlauf des folgenden Schrittes der Baumstruktur führt, wenn:
die den beiden Eingangswerten zugeordneten Zuverlässigkeitsindexe den genannten Wert haben, oder
wenn die Differenz zwischen den beiden Eingangswerten eine vorher festgelegte Schwelle (S) überschreitet.

4. Verfahren nach Anspruch 3, **dadurch gekennzeichnet, daß** der Schwelle bei 4-PSK-moduliertem Träger ein Wert von 3π/16 gegeben wird.

5. Verfahren nach Anspruch 3 oder 4, **dadurch gekennzeichnet, daß** bei der Berechnung des Mittelwertes von zwei Eingangsmittelwerten, von denen einer einen Index hat, der eine niedrigere Zuverlässigkeit als die Schwelle angibt, dieser Eingangsmittelwert durch den anderen ersetzt wird.

6. Verfahren nach einem der vorhergehenden Ansprüche, **dadurch gekennzeichnet, daß** für die Demodulation jedes durch eine Abtastprobe dargestellten Symbols ein Trägerphasenmittelwert verwendet wird, der durch Ermittlung des Schwerpunktes, ausgehend von den Phasen des Trägers im Verlauf der Übertragung von früheren und späteren Symbolen, erhalten wird.

7. Verfahren nach Anspruch 6, **dadurch gekennzeichnet, daß** zum Ermitteln des Schwerpunktes über m=2^{N} Abtastproben (2k+1,...,2k+m) die Ergebnisse der Mittelwerteberechnungen verwendet werden, die über 2^{N} vorhergehende Abtastproben (2k-1,...,2k+m-2) erhalten werden.

8. Verfahren nach Anspruch 7, **dadurch gekennzeichnet, daß** zum Ermitteln des Schwerpunktes nacheinander berechnet werden:
in einem ersten Schritt m/2 Mittelwerte von aufeinanderfolgenden Abtastprobenpaaren,
im Verlauf nachfolgender Schritte die Mittelwerte zwischen zwei beim vorhergehenden Schritt erhaltenen Mittelwerten bis zum Erreichen des Schwerpunktes.

9. Vorrichtung zur digitalen Auswertung der Phase eines r-PSK-phasenmodulierten Trägers, wobei r die Anzahl der Phasenzustände der Modulation ist, umfassend Mittel zur Taktwiedergewinnung, zur Abtastung, zur Digitalisierung der In-Phase- und Quadraturkomponenten der Abtastproben und zur Einschränkung des Bestimmungsbereiches der Phase jeder Abtastprobe auf einen Bereich zwischen +π/r und -π/r und Mittel (12) zur Schwerpunktermittlung über 2^{N} aufeinanderfolgende Abtastproben (N ist eine ganze Zahl), die Mittel zur Berechnung von aufeinanderfolgenden Ausgangsmittelwerten haben, und zwar jedesmal über zwei Werte gemäß einer Baumstruktur mit N Schritten, **gekennzeichnet durch** Mittel (30, 32, 34, 36, 38) zum Versehen jedes Ausgangsmittelwertes mit einem Index, der den Zuverlässigkeitsgrad des Mittelwerts, ausgehend vom Zuverlässigkeitsindex der beiden Eingangsmittelwerte und von ihrem Abstand, angibt, und **durch** Mittel (16) zum Ersetzen, und zwar am Eingang der Mittel zur Berechnung eines Ausgangsmittelwertes, die zwei Eingangsmittelwerte empfangen, von denen einer einen niedrigeren Zuverlässigkeitsindex als eine Schwelle hat, desjenigen der Werte, der zu beseitigen ist, **durch** den anderen.

10. Vorrichtung nach Anspruch 9, **dadurch gekennzeichnet, daß** die genannten Mittel zur Schwerpunktermittlung vorgesehen sind, um den Mittelwert der Phasen zu ermitteln, der für die Demodulation eines Symbols verwendet wird, das durch eine Abtastprobe des Trägers im Verlauf der Übertragung von gleichen Anzahlen von gegenüber diesem Symbol früheren und späteren Symbolen dargestellt wird.

## Claims

1. A method of digitally evaluating the phase of an rPSK phase modulated carrier where r is the number of modulation phase states, in which, after recovering the clock, sampling, and digitizing in-phase and quadrature coordinates of the samples, processing is performed in polar coordinates which comprises reducing the range over which the phase of each sample is defined to a range +π/r to -π/r, and then seeking the barycenter over 2^{N} successive samples, where N is an integer, by performing successive averaging calculations, each time on two values, in application of an N-step tree structure, until an estimated value is obtained, **characterized by** associating each average of two values with an index specifying the degree of reliability of the average, and ignoring those averages which are given a low reliability index in subsequent calculations of averages in the tree structure.

2. A method according to claim 1, **characterized in that** said index is constituted by a bit capable of taking the values 0 and 1, in addition to the bits representing the value of the sample.

3. A method according to claim 1, **characterized in that**, during each step of the tree structure, the reliability index of an average is given a value that causes said average to be ignored in the following step of the tree structure whenever:
the reliability indices associated with both inputs have said value; or
the difference between the two inputs exceeds a predetermined threshold(s).

4. A method according to claim 3, **characterized in that**, for a carrier that is 4PSK modulated, the threshold is given a value of 3π/16.

5. A method according to claim 3 or 4, **characterized in that**, when calculating the average of two input averages, one of which has an index that indicates a reliability lower than the threshold, said one input average is replaced by the other.

6. A method according to claim 1, **characterized in that**, for demodulating each symbol represented by a sample, a carrier phase average is used which is obtained by seeking the barycenter from the phases of the carrier during transmission of earlier symbols and of later symbols.

7. A method according to claim 6, **characterized in that**, to find the barycenter of m=2^{N} samples (2k+1, ..., 2k+m), use is made of partial results obtained on the 2^{N} preceding samples (2k-1, ..., 2k+m-2).

8. A method according to claim 7, **characterized in that**, to find the barycenter, the following are calculated in succession:
in a first step, m/2 averages of pairs of successive samples;
during the following steps, the averages of two averages obtained in the preceding step and separated by m/4, m/8, ..., until the barycenter is obtained.

9. A device for digitally evaluating the phase of an rPSK phase modulated carrier, r being the number of phases of the modulation, comprising:
means for recovering the clock, for sampling, and for digitizing the in-phase and quadrature components of the samples and for reducing the range over which the phase of each sample is defined to the range +π/r to -π/r:
means (12) for seeking the barycenter over 2^{N} successive samples (N being an integer), having means for calculating successive output averages, each time of two values, in application of an N-step tree structure;
**characterized by** means (30, 32, 34, 36, 38) for allocating an index to each output average representative of the degree of reliability of the average on the basis of the reliability indices of the two input averages and on the basis of the difference between the two input averages, and means (16) for replacing, at the input of the means for calculating an output average when receiving two input values, one of which has a reliability index that is below a threshold, the value which is to be ignored by the other value.

10. Device according to claim 9, **characterized in that** said means for seeking the barycenter are arranged for determining the phase average which is used for demodulating a symbol represented by a sample of the carrier during transmission of equal numbers of symbols earlier and later than the symbol represented by the sample.
